# EUROPEAN PATENT SPECIFICATION

(11) **EP 3 113 028 B1**
(45) Date of publication and mention of the grant of the patent: **31.10.2018**
(21) Application number: 14890494.9
(22) Date of filing: 30.04.2014
(51) Int. Cl.: G06F 13/00, G06F 13/38, G06F 3/06

(54) **METHOD, DEVICE, AND SYSTEM FOR INTERACTION BETWEEN HARD DISK DRIVES**
VERFAHREN, VORRICHTUNG UND SYSTEM ZUR INTERAKTION ZWISCHEN FESTPLATTENLAUFWERKEN
PROCÉDÉ, DISPOSITIF ET SYSTÈME D'INTERACTION ENTRE LECTEURS DE DISQUE DUR

(43) Date of publication of application: 04.01.2017
(73) Proprietor: Huawei Technologies Co., Ltd., Longgang District Shenzhen, Guangdong 518129 (CN)
(72) Inventor: LEI, Xiaosong, Shenzhen Guangdong 518129 (CN)
(74) Representative: Epping - Hermann - Fischer
(86) International application number: PCT/CN2014/076567
(87) International publication number: WO 2015/165058

(56) References cited:
- CN-A- 1 627 277
- CN-A- 1 627 277
- CN-A- 103 595 741
- CN-A- 103 701 613
- CN-A- 103 701 613
- US-A1- 2007 263 315
- US-A1- 2007 263 315

## Description

### TECHNICAL FIELD

The present invention relates to the field of storage technologies, and in particular, to a method, an apparatus, and a system for interaction between hard disks.

### BACKGROUND

In recent years, with the rise of cloud storage, hard disks with Ethernet interfaces, that is, Ethernet interface hard disks, are more widely applied.

In the prior art, in a cluster system including Ethernet interface hard disks, a centralized controller, that is, a cluster controller, is generally required to schedule the Ethernet interface hard disks. In a cluster system, if a cluster controller is required to perform service scheduling during interaction between Ethernet interface hard disks, that is, if one Ethernet interface hard disk needs to interact with another Ethernet interface hard disk, the one Ethernet interface hard disk may send a corresponding service request to the cluster controller, and the cluster controller schedules the service request to the corresponding another Ethernet interface hard disk, to complete interaction between the one Ethernet interface hard disk and the another Ethernet interface hard disk.

However, in the foregoing method for interaction between Ethernet interface hard disks, all service requests need to be scheduled by a cluster controller, thereby causing relatively high load pressure of the cluster controller, so that performance of the cluster controller is reduced.

CN 103701613 A discloses a simply mutual authentication method between a terminal and a host. The host receives a secret key information from the terminal, the terminal is legal to the host if the secret key information sent by the terminal matches a secret key information stored in a host database. The terminal obtains hardware identifiers of the hardware in the host, the host is legal to the terminal if the hardware identifiers obtained match hardware identifiers stored the terminal database.

CN1627277 A discloses a smart hard disk (sHDD) which can transmit data with multimedia device via an USB cable directly, there is need to use a computer to play a role of intermediary between the smart hard disk and the multimedia device in data exchanging.

### SUMMARY

To solve a problem in the prior art, embodiments of the present invention provide a method, an apparatus, and a system for interaction between hard disks.

To achieve the foregoing objective, the following technical solutions are used in the embodiments of the present invention.

According to a first aspect, the present invention provides a method for interaction between hard disks, including:
determining, by a first hard disk, a first capability set, where the first capability set is a set of service capabilities supported by the first hard disk;
receiving, by the first hard disk, a second capability set sent by a second hard disk, where the second capability set is a set of service capabilities supported by the second hard disk;
determining, by the first hard disk, a common capability set according to the first capability set and the second capability set, where the common capability set is a set of service capabilities supported by both the first hard disk and the second hard disk; and
determining, by the first hard disk, a collaboration service capability from the common capability set, to use the collaboration service capability to perform service processing with the second hard disk.

In a first possible implementation manner of the first aspect, when the common capability set includes multiple service capabilities, the determining, by the first hard disk, a collaboration service capability from the common capability set includes:
determining, by the first hard disk, a preferred hard disk from the first hard disk and the second hard disk according to a preset policy; and
determining, by the first hard disk, the collaboration service capability according to priorities that are of the multiple service capabilities in the common capability set and are in a capability set of the preferred hard disk.

With reference to the first possible implementation manner of the first aspect, in a second possible implementation manner, the method further includes:
generating, by the first hard disk, a first random number; and
receiving, by the first hard disk, a second random number sent by the second hard disk;
then, the determining, by the first hard disk, a preferred hard disk from the first hard disk and the second hard disk according to a preset policy includes:
   comparing, by the first hard disk, the first random number with the second random number to determine that a hard disk satisfying the preset policy is the preferred hard disk, where the preset policy is that a random number is maximum or that a random number is minimum. With reference to the first possible implementation manner of the first aspect, in a third possible implementation manner, the determining, by the first hard disk, a preferred hard disk from the first hard disk and the second hard disk according to a preset policy includes:
   determining, by the first hard disk and from the first hard disk and the second hard disk, that a hard disk actively initiating service processing is the preferred hard disk. In a fourth possible implementation manner of the first aspect,
   the first hard disk and the second hard disk are hard disks in a same cluster system; the first hard disk is a primary hard disk in the cluster system, the second hard disk is a secondary hard disk in the cluster system, and there are multiple second hard disks.

In a fifth possible implementation manner of the first aspect,
when there are multiple second hard disks, the second capability set is a set of service capabilities supported by all the multiple second hard disks and determined by the multiple second hard disks after service capability negotiation.

With reference to the foregoing first aspect or any implementation manner of the first to the fifth possible implementation manner of the first aspect, in a sixth possible implementation manner, the method further includes:
sending, by the first hard disk, the collaboration service capability to the second hard disk, so that the second hard disk uses the collaboration service capability to perform service processing with the first hard disk.

According to a second aspect, the present invention provides a hard disk, including:
a determining unit, configured to determine a first capability set, where the first capability set is a set of service capabilities supported by the hard disk;
a receiving unit, configured to receive a second capability set sent by a second hard disk, where the second capability set is a set of service capabilities supported by the second hard disk; where
the determining unit is further configured to determine a common capability set according to the first capability set and the second capability set that is received by the receiving unit, and determine a collaboration service capability from the common capability set, where the common capability set is a set of service capabilities supported by both the hard disk and the second hard disk; and
a service processing unit, configured to use the collaboration service capability determined by the determining unit to perform service processing with the second hard disk.

In a first possible implementation manner of the second aspect,
the determining unit is specifically configured to: when the common capability set includes multiple service capabilities, determine a preferred hard disk from the hard disk and the second hard disk according to a preset policy, and determine the collaboration service capability according to priorities that are of the multiple service capabilities in the common capability set and are in a capability set of the preferred hard disk.

With reference to the first possible implementation manner of the second aspect, in a second possible implementation manner, the hard disk further includes a generating unit and a comparing unit; where:
the generating unit is configured to generate a first random number;
the receiving unit is further configured to receive a second random number sent by the second hard disk;
the comparing unit is configured to compare the first random number generated by the generating unit with the second random number received by the receiving unit; and
the determining unit is specifically configured to determine, according to a comparison result of the comparing unit, that a hard disk satisfying the preset policy is the preferred hard disk, where the preset policy is that a random number is maximum or that a random number is minimum.

With reference to the first possible implementation manner of the second aspect, in a third possible implementation manner,
the determining unit is specifically configured to determine, from the hard disk and the second hard disk, that a hard disk actively initiating service processing is the preferred hard disk.

In a fourth possible implementation manner of the second aspect,
the hard disk and the second hard disk are hard disks in a same cluster system; the hard disk is a primary hard disk in the cluster system, the second hard disk is a secondary hard disk in the cluster system, and there are multiple second hard disks.

In a fifth possible implementation manner of the second aspect,
when there are multiple second hard disks, the second capability set is a set of service capabilities supported by all the multiple second hard disks and determined by the multiple second hard disks after service capability negotiation.

With reference to the foregoing second aspect or any implementation manner of the first to the fifth possible implementation manner of the second aspect, in a sixth possible implementation manner, the hard disk further includes a sending unit; where:
the sending unit is configured to send the collaboration service capability determined by the determining unit to the second hard disk, so that the second hard disk uses the collaboration service capability to perform service processing with the hard disk.

According to a third aspect, the present invention provides a hard disk, including:
a processor, configured to: determine a first capability set, receive a second capability set sent by a second hard disk, determine a common capability set according to the first capability set and the second capability set, and determine a collaboration service capability from the common capability set, to use the collaboration service capability to perform service processing with the second hard disk, where the first capability set is a set of service capabilities supported by the hard disk, the second capability set is a set of service capabilities supported by the second hard disk, and the common capability set is a set of service capabilities supported by both the hard disk and the second hard disk; and
a memory, configured to store the first capability set, the second capability set, the common capability set, and the collaboration service capability.

In a first possible implementation manner of the third aspect,
the processor is specifically configured to: when the common capability set includes multiple service capabilities, determine a preferred hard disk from the hard disk and the second hard disk according to a preset policy, and determine the collaboration service capability according to priorities that are of the multiple service capabilities in the common capability set and are in a capability set of the preferred hard disk.

With reference to the first possible implementation manner of the third aspect, in a second possible implementation manner,
the processor is specifically configured to: generate a first random number; receive a second random number sent by the second hard disk; compare the first random number with the second random number; and determine, according to a comparison result, that a hard disk satisfying the preset policy is the preferred hard disk, where the preset policy is that a random number is maximum or that a random number is minimum.

With reference to the first possible implementation manner of the third aspect, in a third possible implementation manner,
the processor is further configured to determine, from the hard disk and the second hard disk, that a hard disk actively initiating service processing is the preferred hard disk.

In a fourth possible implementation manner of the third aspect,
the hard disk and the second hard disk are hard disks in a same cluster system; the hard disk is a primary hard disk in the cluster system, the second hard disk is a secondary hard disk in the cluster system, and there are multiple second hard disks.

In a fifth possible implementation manner of the third aspect,
when there are multiple second hard disks, the second capability set is a set of service capabilities supported by all the multiple second hard disks and determined by the multiple second hard disks after service capability negotiation.

With reference to the foregoing third aspect or any implementation manner of the first possible implementation manner to the fifth possible implementation manner of the third aspect, in a sixth possible implementation manner,
the processor is further configured to send the collaboration service capability to the second hard disk, so that the second hard disk uses the collaboration service capability to perform service processing with the hard disk.

According to a fourth aspect, the present invention provides a cluster system, including:
multiple hard disks according to the foregoing second aspect or third aspect, where one hard disk in the multiple hard disks determines, by executing the method for interaction between hard disks according to the foregoing first aspect, a collaboration service capability for performing service processing with another hard disk in the multiple hard disks except the one hard disk, and uses the collaboration service capability to perform service processing with the another hard disk.

According to the method, the apparatus, and the system for interaction between hard disks that are provided in the present invention, a first hard disk determines a first capability set, where the first capability set is a set of service capabilities supported by the first hard disk; the first hard disk receives a second capability set sent by a second hard disk, where the second capability set is a set of service capabilities supported by the second hard disk; the first hard disk determines a common capability set according to the first capability set and the second capability set, where the common capability set is a set of service capabilities supported by both the first hard disk and the second hard disk; the first hard disk determines a collaboration service capability from the common capability set, to use the collaboration service capability to perform service processing with the second hard disk. By using this solution, the first hard disk may directly interact with the second hard disk, to determine, by means of negotiation, the common capability set supported by both the first hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

### BRIEF DESCRIPTION OF DRAWINGS

FIG. 1 is a first flowchart of a method for interaction between hard disks according to an embodiment of the present invention;
FIG. 2 is a second flowchart of a method for interaction between hard disks according to an embodiment of the present invention;
FIG. 3 is a third flowchart of a method for interaction between hard disks according to an embodiment of the present invention;
FIG. 4 is a fourth flowchart of a method for interaction between hard disks according to an embodiment of the present invention;
FIG. 5 is a flowchart of another method for interaction between hard disks according to an embodiment of the present invention;
FIG. 6 is a first schematic structural diagram of a hard disk according to an embodiment of the present invention;
FIG. 7 is a second schematic structural diagram of a hard disk according to an embodiment of the present invention;
FIG. 8 is a third schematic structural diagram of a hard disk according to an embodiment of the present invention;
FIG. 9 is a fourth schematic structural diagram of a hard disk according to an embodiment of the present invention; and
FIG. 10 is a block diagram of a cluster system according to an embodiment of the present invention.

### DESCRIPTION OF EMBODIMENTS

With reference to the accompanying drawings, the following describes in detail a method, an apparatus, and a system for interaction between hard disks that are provided in embodiments of the present invention.

### Embodiment 1

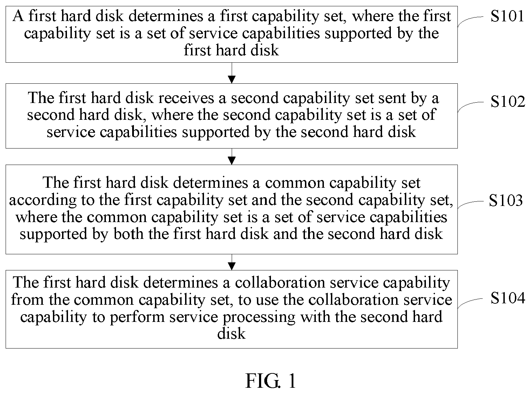

This embodiment of the present invention provides a method for interaction between hard disks. As shown in FIG. 1, the method may include:
S101. A first hard disk determines a first capability set, where the first capability set is a set of service capabilities supported by the first hard disk.

A hard disk provided in this embodiment of the present invention may be a hard disk in a cluster system, and the hard disk may be an Ethernet interface hard disk (also referred to as a network hard disk) in a hard disk cluster system.

An Ethernet interface hard disk provided in this embodiment of the present invention may also be referred to as a smart hard disk, that is, a hard disk provided in this embodiment of the present invention may be a hard disk based on an ARM (advanced reduced instruction set computing machines) system. The hard disk based on the ARM system improves performance of a conventional hard disk by integrating the ARM system into the conventional hard disk.

In the method for interaction between hard disks that is provided in this embodiment of the present invention, before performing service processing, the first hard disk and a second hard disk may first perform interaction in a point-to-point mode (Ad Hoc), to directly negotiate a collaboration service capability that can be used to perform service processing. For example, during data transmission, the first hard disk and the second hard disk may directly negotiate a transmission parameter (for example, an upper limit value of traffic of transmitted data) during the data transmission; or the first hard disk and the second hard disk may directly negotiate to perform mutual check of a data consistency status.

Exemplarily, a first hard disk side is used as an example. If a first hard disk needs to perform service processing with a second hard disk, the first hard disk may negotiate with the second hard disk to determine a collaboration service capability for performing service processing with the second hard disk. Specifically, the first hard disk determines a first capability set, where the first capability set is a capability set of the first hard disk, and is a set of service capabilities supported by the first hard disk; that is, the first capability set is a set of service capabilities corresponding to the first hard disk.

It should be noted that, a service capability provided in this embodiment of the present invention is a service capability owned by a hard disk, that is, a service that the hard disk can provide. For example, a service capability in the first capability set is a service capability owned by the first hard disk, that is, a service that the first hard disk can provide.

Specifically, a service capability of a hard disk provided in this embodiment of the present invention may be understood as that, an Ethernet interface hard disk has a capability of encoding and sending specific information, or receiving and decoding the specific information, to indicate that work completed by the hard disk is independent and has an execution time boundary. For example, the hard disk performs data compression and an antivirus operation, searches for a piece of data, and executes data check.

For example, service capabilities owned by a hard disk may include: a protocol used by the hard disk for communication; a data connection manner used by the hard disk for different bandwidth; a manner in which the hard disk compresses communication data; a transmission parameter used by the hard disk for communication; a manner in which the hard disk encrypts data; a manner in which the hard disk performs mutual check of a data consistency status. Certainly, service capabilities owned by a hard disk provided in this embodiment of the present invention include but are not limited to the foregoing types, that is, all services that the hard disk can provide fall within a protection scope of the present invention.

Further, a specific service capability owned by a hard disk may be determined by an actual requirement of using the hard disk, which is not limited in the present invention.
S102. The first hard disk receives a second capability set sent by a second hard disk, where the second capability set is a set of service capabilities supported by the second hard disk.

The first hard disk receives the second capability set sent by the second hard disk, where the second capability set is a capability set of the second hard disk, and is a set of service capabilities supported by the second hard disk; that is, the second capability set is a set of service capabilities corresponding to the second hard disk.

It should be noted that, the present invention may impose no limitation on a sequence for executing steps S101 and S102, that is, in the present invention, S101 may be executed before S102, or S102 may be executed before S101, or S101 and S102 may be executed simultaneously.
S103. The first hard disk determines a common capability set according to the first capability set and the second capability set, where the common capability set is a set of service capabilities supported by both the first hard disk and the second hard disk.

After the first hard disk determines the first capability set corresponding to the first hard disk and receives the second capability set corresponding to the second hard disk, the first hard disk may determine a common capability set of the first capability set and the second capability set according to the first capability set and the second capability set, where the common capability set may be the set of the service capabilities supported by both the first hard disk and the second hard disk.

So far, the first hard disk has determined the common capability set of the first capability set and the second capability set.

It should be noted that, in the method for interaction between hard disks that is provided in this embodiment of the present invention, because each hard disk has different performance, a priority sequence for implementing a service capability in the foregoing common capability set may be different in a capability set of each hard disk, that is, priority sequences for implementing the service capability in the foregoing common capability set may be different in the first capability set and the second capability set.

Particularly, a priority sequence for implementing, in a capability set corresponding to each hard disk, a service capability included in the capability set may be used to represent a priority of the service capability in the capability set. Specifically, a service capability with a top priority sequence of implementation in the capability set has a high priority in the capability set; correspondingly, a service capability with a back priority sequence of implementation in the capability set has a low priority in the capability set.
S104. The first hard disk determines a collaboration service capability from the common capability set, to use the collaboration service capability to perform service processing with the second hard disk.

After the first hard disk determines the common capability set of the first capability set and the second capability set, the first hard disk may determine the collaboration service capability from the common capability set, and use the collaboration service capability to perform service processing with the second hard disk.

It may be understood that, the first hard disk may determine, according to a priority that is of a service capability in the common capability set and is in the first capability set or the second capability set, a collaboration service capability for performing service processing from the common capability set.

Further, the first hard disk may determine, from the common capability set, that a service capability with a highest priority in the first capability set or the second capability set is the collaboration service capability, or may determine, from the common capability set, that a service capability with a lowest priority in the first capability set or the second capability set is the collaboration service capability, or may determine, from the common capability set, that a service capability with another priority in the first capability set or the second capability set is the collaboration service capability, which may be specifically determined according to an actual design situation. That is, the first hard disk may determine the collaboration service capability from the common capability set according to any condition meeting an actual requirement, which is not limited in the present invention. A specific method for determining the collaboration service capability from the common capability set by the first hard disk is described in detail in a subsequent embodiment.

It may be understood that, in the method for interaction between hard disks that is provided in this embodiment of the present invention, only one hard disk, that is, the first hard disk, in all hard disks in the cluster system is used as an example to make exemplary description on the method for interaction between hard disks that is provided in this embodiment of the present invention. However, a method for performing interaction by another hard disk such as the second hard disk in the cluster system is similar to a method for performing interaction by the first hard disk, and details are not described herein again. That is, before performing service processing, two hard disks that are to participate in service processing both may perform interaction and negotiation according to the interaction method provided in this embodiment of the present invention, to determine a collaboration service capability supported by both of the two hard disks that are to participate in service processing, so that each of the two hard disks that are to participate in service processing performs, according to the collaboration service capability, service processing with the other hard disk that is to participate in service processing.

For example, it is assumed that a hard disk A represents the foregoing first hard disk, a hard disk B represents the foregoing second hard disk, a set of service capabilities supported by the hard disk A is A{Cap1, Cap2, Cap3, Cap4}, and a set of service capabilities supported by the hard disk B is B {Cap5, Cap2, Cap6, Cap1}. According to the method for interaction between hard disks that is provided in this embodiment of the present invention, before the hard disk A performs service processing with the hard disk B, the hard disk A needs to negotiate with the hard disk B, to determine a collaboration service capability for performing, by the hard disk A, service processing with the hard disk B. Specifically, the hard disk A may determine, according to the set of the service capabilities supported by the hard disk A and the set of the service capabilities supported by the hard disk B, that a set of service capabilities supported by both the hard disk A and the hard disk B is {Cap1, Cap2}, that is, a common capability set of the set of the service capabilities supported by the hard disk A and the set of the service capabilities supported by the hard disk B is {Cap1, Cap2}. After the hard disk A determines the common capability set, the hard disk A may select a preferred hard disk from the hard disk A and the hard disk B according to a preset policy (which is described in detail in a subsequent embodiment, and details are not described herein again); the hard disk A further determines the collaboration service capability from the common capability set according to priorities that are of service capabilities Cap1 and Cap2 in the common capability set and are in a capability set of the preferred hard disk; the hard disk A and the hard disk B may perform service processing according to the collaboration service capability. For example, if the preferred hard disk selected by the hard disk A is the hard disk A, the hard disk A may select a service capability from Cap1 and Cap2 according to priorities that are of Cap1 and Cap2 in A{Cap1, Cap2, Cap3, Cap4}; if Cap1 is used as the collaboration service capability, the hard disk A and the hard disk B may finally perform service processing according to Cap1.

In the method for interaction between hard disks that is provided in this embodiment of the present invention, because interaction between hard disks does not need to rely on a cluster controller and only relates to interaction and negotiation between the hard disks, frequent communication between the hard disks and the cluster controller can be prevented, which reduces pressure of the cluster controller, decreases interaction times, reduces a service processing delay, and improves overall performance of a cluster system.

According to the method for interaction between hard disks that is provided in this embodiment of the present invention, a first hard disk determines a first capability set, where the first capability set is a set of service capabilities supported by the first hard disk; the first hard disk receives a second capability set sent by a second hard disk, where the second capability set is a set of service capabilities supported by the second hard disk; the first hard disk determines a common capability set according to the first capability set and the second capability set, where the common capability set is a set of service capabilities supported by both the first hard disk and the second hard disk; the first hard disk determines a collaboration service capability from the common capability set, to use the collaboration service capability to perform service processing with the second hard disk. By using this solution, the first hard disk may directly interact with the second hard disk, to determine, by means of negotiation, the common capability set supported by both the first hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

### Embodiment 2

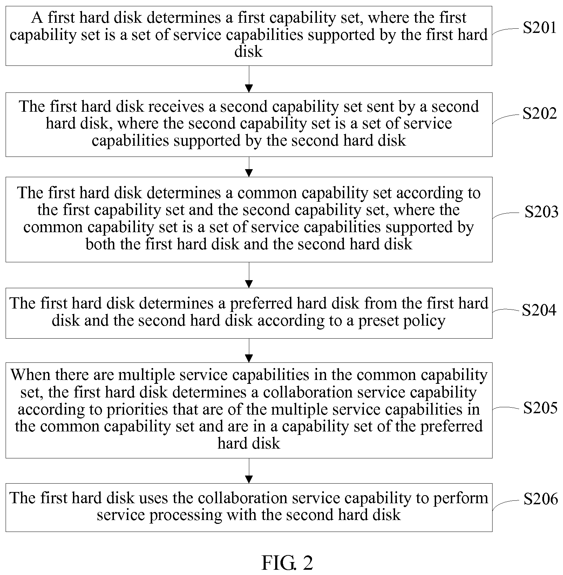

This embodiment of the present invention provides a method for interaction between hard disks. As shown in FIG. 2, the method may include:
S201. A first hard disk determines a first capability set, where the first capability set is a set of service capabilities supported by the first hard disk.

A hard disk provided in this embodiment of the present invention may be a hard disk in a cluster system, and the hard disk may be an Ethernet interface hard disk in a hard disk cluster system.

An Ethernet interface hard disk provided in this embodiment of the present invention may also be referred to as a smart hard disk, that is, a hard disk provided in this embodiment of the present invention may be a hard disk based on an ARM system. The hard disk based on the ARM system improves performance of a conventional hard disk by integrating the ARM system into the conventional hard disk.

In the method for interaction between hard disks that is provided in this embodiment of the present invention, before performing service processing, the first hard disk and a second hard disk may first perform interaction in a point-to-point mode, to directly negotiate a collaboration service capability that can be used to perform service processing. For example, during data transmission, the first hard disk and the second hard disk may directly negotiate a transmission parameter (for example, an upper limit value of traffic of transmitted data) during the data transmission; or the first hard disk and the second hard disk may directly negotiate to perform mutual check of a data consistency status on data.

Exemplarily, a first hard disk side is used as an example. If a first hard disk needs to perform service processing with a second hard disk, the first hard disk may negotiate with the second hard disk to determine a collaboration service capability for performing service processing with the second hard disk. Specifically, the first hard disk determines a first capability set, where the first capability set is a capability set of the first hard disk, and is a set of service capabilities supported by the first hard disk; that is, the first capability set is a set of service capabilities corresponding to the first hard disk.

It should be noted that, a service capability provided in this embodiment of the present invention is a service capability owned by a hard disk, that is, a service that the hard disk can provide. For example, a service capability in the first capability set is a service capability owned by the first hard disk, that is, a service that the first hard disk can provide.

Specifically, a service capability of a hard disk provided in this embodiment of the present invention may be understood as that, an Ethernet interface hard disk has a capability of encoding and sending specific information, or receiving and decoding the specific information, to indicate that work completed by the hard disk is independent and has an execution time boundary. For example, the hard disk performs data compression and an antivirus operation, searches for a piece of data, and executes data check.

For example, service capabilities owned by a hard disk may include: a protocol used by the hard disk for communication; a data connection manner used by the hard disk for different bandwidth; a manner in which the hard disk compresses communication data; a transmission parameter used by the hard disk for communication; a manner in which the hard disk encrypts data; a manner in which the hard disk performs mutual check of a data consistency status. Certainly, service capabilities owned by a hard disk provided in this embodiment of the present invention include but are not limited to the foregoing types, that is, all services that the hard disk can provide fall within a protection scope of the present invention.

Further, a specific service capability owned by a hard disk may be determined by an actual requirement of using the hard disk, which is not limited in the present invention.
S202. The first hard disk receives a second capability set sent by a second hard disk, where the second capability set is a set of service capabilities supported by the second hard disk.

The first hard disk receives the second capability set sent by the second hard disk, where the second capability set is a capability set of the second hard disk, and is a set of service capabilities supported by the second hard disk; that is, the second capability set is a set of service capabilities corresponding to the second hard disk.

It should be noted that, the present invention may impose no limitation on a sequence for executing S201 and S202, that is, in the present invention, S201 may be executed before S202, or S202 may be executed before S201, or S201 and S202 may be executed simultaneously.
S203. The first hard disk determines a common capability set according to the first capability set and the second capability set, where the common capability set is a set of service capabilities supported by both the first hard disk and the second hard disk.

After the first hard disk determines the first capability set corresponding to the first hard disk and receives the second capability set corresponding to the second hard disk, the first hard disk may determine a common capability set of the first capability set and the second capability set according to the first capability set and the second capability set, where the common capability set may be the set of the service capabilities supported by both the first hard disk and the second hard disk.

So far, the first hard disk has determined the common capability set of the first capability set and the second capability set.
S204. The first hard disk determines a preferred hard disk from the first hard disk and the second hard disk according to a preset policy.

After the first hard disk acquires the first capability set corresponding to the first hard disk and the second capability set corresponding to the second hard disk, the first hard disk may determine a hard disk from the first hard disk and the second hard disk as the preferred hard disk according to the preset policy.

Particularly, a preferred hard disk provided in this embodiment of the present invention may be a hard disk satisfying the preset policy. The following describes a specific preset policy in detail.

Optionally, preset policies provided in this embodiment of the present invention may include a random number comparison policy and a policy of actively initiating service processing. Specifically, that the first hard disk determines a preferred hard disk from the first hard disk and the second hard disk according to a preset policy is described in detail in a subsequent part of this embodiment.
S205. When there are multiple service capabilities in the common capability set, the first hard disk determines a collaboration service capability according to priorities that are of the multiple service capabilities in the common capability set and are in a capability set of the preferred hard disk.

It should be noted that, in the method for interaction between hard disks that is provided in this embodiment of the present invention, because each hard disk has different performance, a priority sequence for implementing a service capability in the foregoing common capability set may be different in a capability set of each hard disk, that is, priority sequences for implementing the service capability in the foregoing common capability set may be different in the first capability set and the second capability set.

Particularly, a priority sequence for implementing, in a capability set corresponding to each hard disk, a service capability included in the capability set may be used to represent a priority of the service capability in the capability set. Specifically, a service capability with a top priority sequence of implementation in the capability set has a high priority in the capability set; correspondingly, a service capability with a back priority sequence of implementation in the capability set has a low priority in the capability set.

After the first hard disk determines the preferred hard disk from the first hard disk and the second hard disk, when the common capability set includes multiple service capabilities, the first hard disk may determine the collaboration service capability from the common capability set according to priorities that are of the multiple service capabilities in the common capability set and are in a capability set of the preferred hard disk, to use the collaboration service capability to perform service processing with the second hard disk.

It may be understood that the common capability set may include multiple service capabilities or one service capability. A specific quantity of service capabilities in the common capability set is related to an actually required capability, which is not limited in the present invention.

Further, if there is only one service capability in the common capability set, the first hard disk may directly use the service capability as the collaboration service capability, and use the collaboration service capability to perform service processing with the second hard disk.

Exemplarily, if the first hard disk determines that the preferred hard disk is the first hard disk, the first hard disk may determine, from the common capability set, that a service capability with a highest priority in a capability set corresponding to the first hard disk, that is, the first capability set, is the collaboration service capability; correspondingly, if the first hard disk determines that the preferred hard disk is the second hard disk, the first hard disk may determine, from the common capability set, that a service capability with a highest priority in a capability set corresponding to the second hard disk, that is, the second capability set, is the collaboration service capability.

Further, the first hard disk may determine, from the common capability set, that a service capability with a highest priority in a capability set corresponding to the preferred hard disk is the collaboration service capability, or may determine, from the common capability set, that a service capability with a lowest priority in the capability set corresponding to the preferred hard disk is the collaboration service capability, or may determine, from the common capability set, that a service capability with another priority in the capability set corresponding to the preferred hard disk is the collaboration service capability, which may be specifically determined according to an actual design situation. That is, the first hard disk may determine the collaboration service capability from the common capability set according to any condition meeting an actual requirement, which is not limited in the present invention.

For example, that the preset policy in the foregoing S204 is the policy of actively initiating service processing is used as an example. It is assumed that a hard disk A represents the foregoing first hard disk, a hard disk B represents the foregoing second hard disk, a set of service capabilities supported by the hard disk A is A{Cap1, Cap2, Cap3, Cap4}, and a set of service capabilities supported by the hard disk B is B {Cap5, Cap2, Cap6, Cap1}. According to the method for interaction between hard disks that is provided in this embodiment of the present invention, before the hard disk A performs service processing with the hard disk B, the hard disk A needs to negotiate with the hard disk B, to determine a collaboration service capability for performing, by the hard disk A, service processing with the hard disk B. Specifically, the hard disk A may determine, according to the set of the service capabilities supported by the hard disk A and the set of the service capabilities supported by the hard disk B, that a set of service capabilities supported by both the hard disk A and the hard disk B is {Cap1, Cap2}, that is, a common capability set of the set of the service capabilities supported by the hard disk A and the set of the service capabilities supported by the hard disk B is {Cap1, Cap2}. After the hard disk A determines the common capability set, the hard disk A may select, from the hard disk A and the hard disk B, a hard disk actively initiating service processing, and use the hard disk as the preferred hard disk; the hard disk A may further determine the collaboration service capability from the common capability set according to priorities that are of service capabilities Cap1 and Cap2 in the common capability set and are in the capability set of the preferred hard disk. For example, if the hard disk actively initiating service processing selected by the hard disk A is the hard disk A, the hard disk A may select a service capability from Cap1 and Cap2 as the collaboration service capability according to priorities that are of Cap1 and Cap2 in A {Cap1, Cap2, Cap3, Cap4}; if the hard disk actively initiating service processing selected by the hard disk A is the hard disk B, the hard disk A may select a service capability from Cap1 and Cap2 as the collaboration service capability according to priorities that are of Cap1 and Cap2 in B{Cap5, Cap2, Cap6, Cap1}.
S206. The first hard disk uses the collaboration service capability to perform service processing with the second hard disk.

After the first hard disk determines the collaboration service capability from the common capability set, the first hard disk may use the collaboration service capability to perform service processing with the second hard disk. For example, the first hard disk may use the collaboration service capability to perform data transmission with the second hard disk, or the first hard disk may use the collaboration service capability to perform mutual check of a data consistency status with the second hard disk.

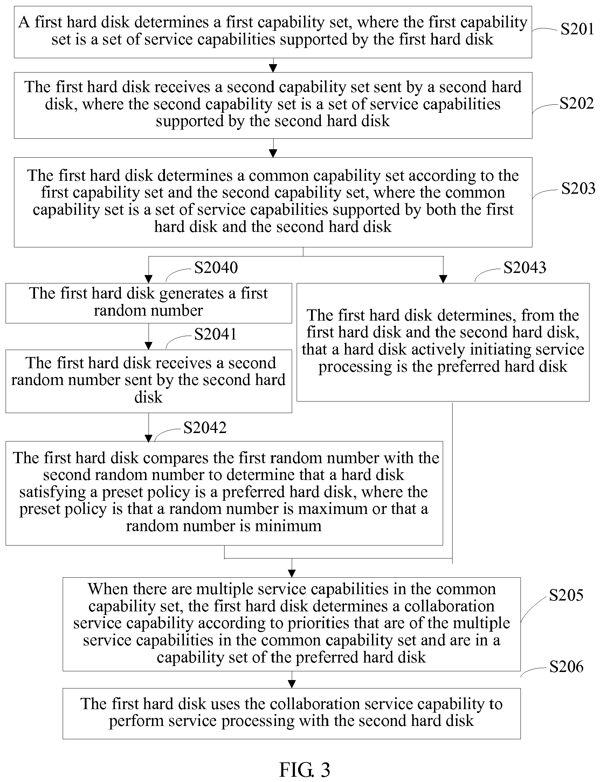

Further, as shown in FIG. 3, corresponding to the foregoing two preset policies provided in this embodiment of the present invention, S204 provided in this embodiment of the present invention, that is, that the first hard disk determines a preferred hard disk from the first hard disk and the second hard disk according to a preset policy, may include:

### (1) Random number comparison policy

Specifically, if the preset policy provided in this embodiment of the present invention is the random number comparison policy, before S204 provided in this embodiment of the present invention, the method may further include:
S2040. The first hard disk generates a first random number.

A random number is a result generated by a dedicated random experiment. A most important feature of the random number is that a generated latter number has no relationship with a former number. In an actual application, random numbers generated by a computer or a calculator have an extremely long periodicity, have no real randomness, but have a statistical characteristic similar to that of a random number.

For ease of implementation, a random number provided in this embodiment of the present invention may be similar to the foregoing random numbers generated in the actual application. Certainly, a random number provided in this embodiment of the present invention may also be a real random number generated by a physical phenomenon, for example, a random number generated by a phenomenon such as throwing a coin or a dice, spinning a wheel, noise generated during use of an electronic component, or nuclear fission.

If the first hard disk uses the random number comparison policy, the first hard disk may generate one first random number.
S2041. The first hard disk receives a second random number sent by the second hard disk.

The first hard disk receives the second random number sent by the second hard disk, where the second random number is generated by the second hard disk.

In this embodiment of the present invention, one hard disk may correspondingly generate one random number. For example, the first hard disk may correspondingly generate one first random number, and the second hard disk may correspondingly generate one second random number.

It should be noted that, the present invention may impose no limitation on a sequence for executing S2040 and S2041, that is, in the present invention, S2040 may be executed before S2041, or S2041 may be executed before S2040, or S2040 and S2041 may be executed simultaneously, which is not limited in the present invention.
S204 provided in this embodiment of the present invention may include:
   S2042. The first hard disk compares the first random number with the second random number to determine that a hard disk satisfying the preset policy is the preferred hard disk, where the preset policy is that a random number is maximum or that a random number is minimum.

After the first hard disk generates the first random number and receives the second random number sent by the second hard disk, the first hard disk may compare the first random number with the second random number, to determine that the hard disk satisfying the preset policy is the preferred hard disk, where the preset policy may be that a random number is maximum or that a random number is minimum.

Exemplarily, if the preset policy is that a random number is maximum, the first hard disk may determine that a hard disk with a maximum random number in the first random number and the second random number is the preferred hard disk; correspondingly, if the preset policy is that a random number is minimum, the first hard disk may determine that a hard disk with a minimum random number in the first random number and the second random number is the preferred hard disk.

Further, the preset policy provided in this embodiment of the present invention may be that a random number is maximum, that a random number is minimum, or that a random number is an even number, or may be another condition meeting an actual usage requirement, such as that a random number is an odd number, which is not limited in the present invention.

Particularly, if the preset policy is that a random number is an even number or that a random number is an odd number, each hard disk may need to generate a random number for multiple times, that is, the first hard disk needs to execute S2040-S2042 for multiple times. As a result, a unique hard disk satisfying the preset policy is finally determined, and the hard disk is used as the preferred hard disk.

### (2) Policy of actively initiating service processing

Specifically, if the preset policy provided in this embodiment of the present invention is the policy of actively initiating service processing, S204 provided in this embodiment of the present invention may include:
S2043. The first hard disk determines, from the first hard disk and the second hard disk, that a hard disk actively initiating service processing is the preferred hard disk.

If the first hard disk determines that the hard disk actively initiating service processing is the first hard disk, the first hard disk may determine that the first hard disk is the preferred hard disk; correspondingly, if the first hard disk determines that the hard disk actively initiating service processing is the second hard disk, the first hard disk may determine that the second hard disk is the preferred hard disk.

Optionally, in the method for interaction between hard disks that is provided in this embodiment of the present invention, when determining, by means of negotiation, the collaboration service capability for performing service processing, the first hard disk and the second hard disk may also use a pre-designed customized policy code to determine the collaboration service capability. The customized policy code may be delivered by a cluster controller to the first hard disk and the second hard disk, and the customized policy code may be "a mobile code that describes a policy" or "an execution code based on a public virtual machine engine".

Specifically, after the first hard disk and the second hard disk in the cluster system receive the customized policy code delivered by the cluster controller, the first hard disk and the second hard disk may use a service capability indicated in the customized policy code as a collaboration service capability for performing service processing with each other, and uses the collaboration service capability to perform service processing with each other.

It should be noted that, the customized policy code may be dynamically loaded into the first hard disk and the second hard disk for execution as the foregoing mobile code that describes a policy, or may be preset in firmware of the first hard disk and the second hard disk. For example, the customized policy code may be expressed as "if (bandwidth < xxx), then use a {simplified data connection} capability". As a result, if the first hard disk and the second hard disk both support the "simplified data connection" capability in the customized policy code, the first hard disk and the second hard disk may use the "simplified data connection" capability as a collaboration service capability for performing communication with each other, and use the "simplified data connection" capability to perform communication with each other.

Exemplarily, if the customized policy code delivered by the cluster controller to the first hard disk and the second hard disk may be semantically expressed as:
if (each hard disk supports the remote direct memory access over Converged Ethernet protocol), every two hard disks use the technology to perform communication; if any hard disk does not support the remote direct memory access over Converged Ethernet protocol, every two hard disks perform communication in a basic TCP/IP (Transmission Control Protocol/Internet Protocol) manner;
when the first hard disk and the second hard disk both support a "remote direct memory access over Converged Ethernet protocol" service capability, the first hard disk and the second hard disk may use the "remote direct memory access over Converged Ethernet protocol" service capability as the collaboration service capability, and perform communication with each other by using the remote direct memory access over Converged Ethernet protocol.

Certainly, if at least one hard disk in the first hard disk and the second hard disk does not support the "remote direct memory access over Converged Ethernet protocol" capability, the first hard disk and the second hard disk may perform communication with each other in the basic TCP/IP manner.

Further, it is assumed that there are three Ethernet interface hard disks, for example, a hard disk A, a hard disk B, and a hard disk C. The three hard disks all support a JVM (Java virtual machine), and the cluster controller delivers a Java bytecode to each of the three Ethernet interface hard disks, where the Java byte code may be semantically expressed as:
if (the hard disk A, the hard disk B, and the hard disk C all support a gzip compression code), communication is performed after transmitted data is compressed by using gzip; if any one of the hard disk A, the hard disk B, and the hard disk C does not support a gzip compression code, a compression code is not used to perform communication.

The foregoing gzip is a data compression format, and each of the three hard disks may execute the foregoing Java bytecode based on the JVM.

When the three hard disks all support a "gzip compression code" capability, each of the three hard disks may use a "gzip compression code" service capability as a collaboration service capability, and performs communication after the transmitted data is compressed by using gzip. Certainly, if one hard disk in the three hard disks does not support the "gzip compression code" capability, none of the three hard disks may use a compression code to perform communication. It should be noted that, the preset policy provided in this embodiment of the present invention includes but is not limited to the several types described above, that is, the preset policy provided in this embodiment of the present invention may be designed or adaptively adjusted according to an actual usage requirement, which is not limited in the present invention.

Further, in this embodiment of the present invention, if the service capability that is determined by the first hard disk and is in the common capability set carries a parameter, the parameter carried in the service capability in the common capability set may be determined in a predetermined manner. For example, the service capability in the common capability set is a data compression capability, and a parameter carried in the data compression capability is a size of a scanning block during data compression; then, the parameter carried in the data compression capability may be determined in a manner in which the cluster controller delivers a customized policy code. Specifically, if the customized policy code delivered by the cluster controller specifies a compression ratio at which data compression needs to be performed, the size of the scanning block during data compression may be determined according to the compression ratio.

For example, if one megabyte of data needs to be compressed at a relatively high compression ratio, the size of the scanning block during data compression may be one kilobyte; if one megabyte of data needs to be compressed at a relatively low compression ratio, the size of the scanning block during data compression may be 64 kilobytes.

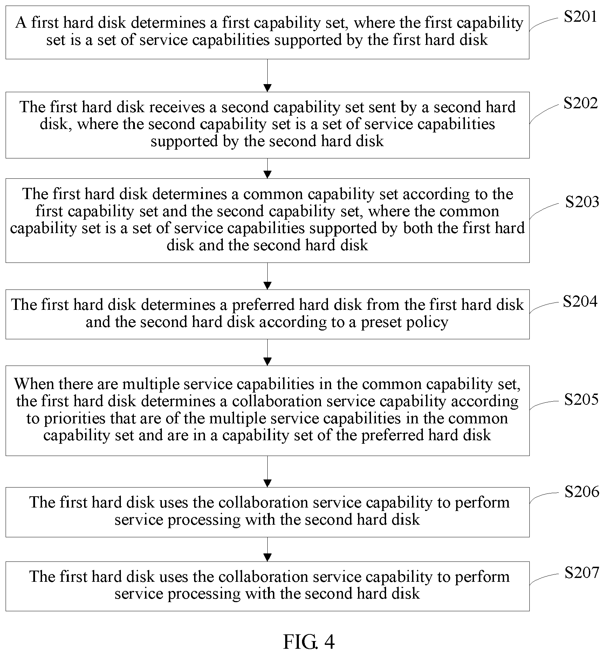

Further, as shown in FIG. 4, after S205, that is, when there are multiple service capabilities in the common capability set, the first hard disk determines a collaboration service capability form the common capability set according to priorities that are of the multiple service capabilities in the common capability set and are in a capability set of the preferred hard disk, the method for interaction between hard disks that is provided in this embodiment of the present invention may further include:
S207. The first hard disk sends the collaboration service capability to the second hard disk, so that the second hard disk uses the collaboration service capability to perform service processing with the first hard disk.

After the first hard disk determines the collaboration service capability from the common capability set, the first hard disk may send the collaboration service capability to the second hard disk, so that the second hard disk uses the collaboration service capability to perform service processing with the first hard disk.

It should be noted that, the present invention may impose no limitation on a sequence for executing S206 and S207, that is, in the present invention, S206 may be executed before S207, or S207 may be executed before S206, or S206 and S207 may be executed simultaneously.

It may be understood that, in the method for interaction between hard disks that is provided in this embodiment of the present invention, only one hard disk, that is, the first hard disk, in all hard disks in the cluster system is used as an example to make exemplary description on the method for interaction between hard disks that is provided in this embodiment of the present invention. However, a method for performing interaction by another hard disk such as the second hard disk in the cluster system is similar to a method for performing interaction by the first hard disk, and details are not described herein again. That is, before performing service processing, two hard disks that are to participate in service processing both may perform interaction and negotiation according to the interaction method provided in this embodiment of the present invention, to determine a collaboration service capability supported by both of the two hard disks that are to participate in service processing, so that each of the two hard disks that are to participate in service processing performs, according to the collaboration service capability, service processing with the other hard disk that is to participate in service processing.

In the method for interaction between hard disks that is provided in this embodiment of the present invention, because interaction between hard disks does not need to rely on a cluster controller and only relates to interaction and negotiation between the hard disks, frequent communication between the hard disks and the cluster controller can be prevented, which reduces pressure of the cluster controller, decreases interaction times, reduces a service processing delay, and improves overall performance of a cluster system.

According to the method for interaction between hard disks that is provided in this embodiment of the present invention, a first hard disk determines a first capability set, where the first capability set is a set of service capabilities supported by the first hard disk; the first hard disk receives a second capability set sent by a second hard disk, where the second capability set is a set of service capabilities supported by the second hard disk; the first hard disk determines a common capability set according to the first capability set and the second capability set, where the common capability set is a set of service capabilities supported by both the first hard disk and the second hard disk; the first hard disk determines a collaboration service capability from the common capability set, to use the collaboration service capability to perform service processing with the second hard disk. By using this solution, the first hard disk may directly interact with the second hard disk, to determine, by means of negotiation, the common capability set supported by both the first hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

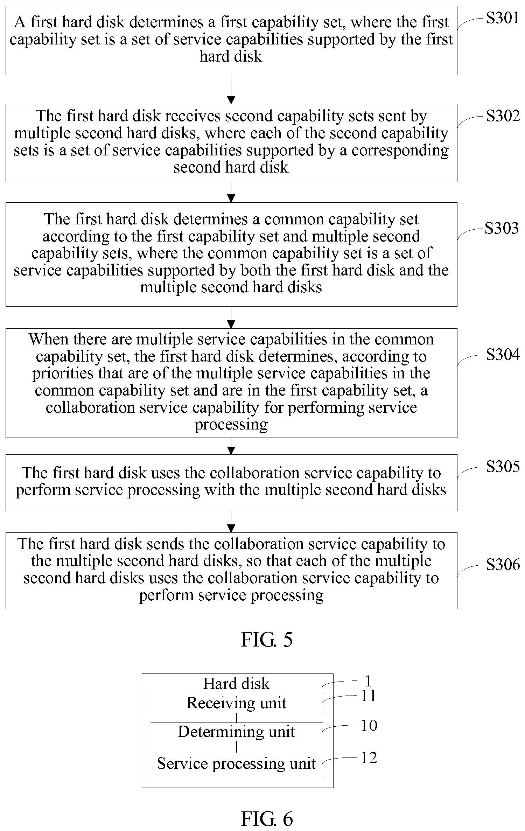

Further, as shown in FIG. 5, this embodiment of the present invention provides another method for interaction between hard disks, where the method is applied to a scenario in which negotiation is performed between multiple hard disks in a same cluster system to determine a collaboration service capability. A cluster controller does not need to participate in negotiation between hard disks in a cluster system; therefore, the hard disks in the cluster system may first use Paxos (a distributed election algorithm) or another cluster system election algorithm to select a primary hard disk, that is, a first hard disk, from the hard disks in the cluster system; other hard disks in the cluster system except the first hard disk are all secondary hard disks, that is, second hard disks, and there are multiple second hard disks. The primary hard disk in this embodiment of the present invention refers to a hard disk that is in the cluster system and may perform some operations in replacement of another hard disk, that is, a leading hard disk in the cluster system. The secondary hard disks refer to the other hard disks in the cluster system except the primary hard disk.

Specifically, a method for interaction between multiple hard disks in a cluster system may include:
S301. A first hard disk determines a first capability set, where the first capability set is a set of service capabilities supported by the first hard disk.

After the hard disks in the cluster system determine a primary hard disk, that is, the first hard disk, the first hard disk may first determine the first capability set, where the first capability set is the set of the service capabilities supported by the first hard disk.
S302. The first hard disk receives second capability sets sent by multiple second hard disks, where each of the second capability sets is a set of service capabilities supported by a corresponding second hard disk.

After the hard disks in the cluster system determine the primary hard disk, that is, the first hard disk, multiple secondary hard disks, that is, the multiple second hard disks, may send, to the first hard disk, sets of service capabilities supported by the multiple secondary hard disks, that is, the second capability sets in a one-to-one correspondence with the multiple second hard disks.

It should be noted that, after the hard disks in the cluster system select the primary hard disk from the cluster system, the present invention may impose no limitation on a sequence for executing S301 and S302, that is, in the present invention, S301 may be executed before S302, or S302 may be executed before S301, or S301 and S302 may be executed simultaneously. S303. The first hard disk determines a common capability set according to the first capability set and multiple second capability sets, where the common capability set is a set of service capabilities supported by both the first hard disk and the multiple second hard disks.

After the first hard disk determines the first capability set and receives the multiple second capability sets, the first hard disk may compare the first capability set with the multiple second capability sets, and determine a common capability set of the first capability set and the multiple second capability sets, where the common capability set is the set of the service capabilities supported by both the first hard disk and the multiple second hard disks.
S304. When there are multiple service capabilities in the common capability set, the first hard disk determines, according to priorities that are of the multiple service capabilities in the common capability set and are in the first capability set, a collaboration service capability for performing service processing.

After the first hard disk determines the common capability set supported by both the first hard disk and the multiple second hard disks, when there are multiple service capabilities in the common capability set, the first hard disk may determine, according to priorities that are of the multiple service capabilities in the common capability set and are in the first capability set, a collaboration service capability for performing service processing from the common capability set.
S305. The first hard disk uses the collaboration service capability to perform service processing with the multiple second hard disks.

After the first hard disk determines the collaboration service capability for performing service processing, the first hard disk may use the collaboration service capability to perform service processing with the multiple second hard disks.
S306. The first hard disk sends the collaboration service capability to the multiple second hard disks, so that each of the multiple second hard disks uses the collaboration service capability to perform service processing.

After the first hard disk determines the collaboration service capability for performing service processing, the first hard disk may send the collaboration service capability to each of the multiple second hard disks, so that each of the multiple second hard disks may use the collaboration service capability to perform service processing with another hard disk.

It should be noted that, the present invention may impose no limitation on a sequence for executing S305 and S306, that is, in the present invention, S305 may be executed before S306, or S306 may be executed before S305, or S305 and S306 may be executed simultaneously.

In the another method for interaction between hard disks that is provided in this embodiment of the present invention, because interaction between hard disks does not need to rely on a cluster controller and only relates to interaction and negotiation between the hard disks, frequent communication between the hard disks and the cluster controller can be prevented, which reduces pressure of the cluster controller, decreases interaction times, reduces a service processing delay, and improves overall performance of a cluster system.

According to the another method for interaction between hard disks that is provided in this embodiment of the present invention, a first hard disk may directly interact with multiple second hard disks, to determine, by means of negotiation, a common capability set supported by both the first hard disk and the multiple second hard disks; the first hard disk may determine a collaboration service capability for performing service processing from the common capability set, and send the collaboration service capability to the multiple second hard disks, so that the first hard disk and the multiple second hard disks may use the collaboration service capability to perform service processing with each other. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

Further, this embodiment of the present invention provides still another method for interaction between hard disks, where the method is applied to a scenario in which negotiation is performed between multiple hard disks in a same cluster system to determine a collaboration service capability. A cluster controller does not need to participate in negotiation between hard disks in a cluster system, and negotiation needs to be performed only between every two hard disks; therefore, a gossip protocol may be used to perform negotiation in the method. Specifically, the method may include:
All hard disks in the cluster system send, according to the gossip protocol, sets of service capabilities supported by the hard disks and random numbers generated by the hard disks. After disordered communication, all the hard disks in the cluster system finally know a set of service capabilities supported by all these hard disks, that is, a common capability set supported by all the hard disks in the cluster system; find, by comparing the random numbers, a hard disk satisfying a preset policy, and use the hard disk as a preferred hard disk; and finally determine, according to a priority that is of a service capability in the common capability set supported by all the hard disks in the cluster system and is in a capability set of the preferred hard disk, a collaboration service capability for performing service processing from the common capability set.

Optionally, the foregoing preset policy may be that a random number is maximum or that a random number is minimum. Specifically, the preset policy may be that a random number is maximum, that a random number is minimum, or that a random number is an even number, or may be another condition meeting an actual usage requirement, such as that a random number is an odd number, which is not limited in the present invention.

It should be noted that, the foregoing gossip protocol may also be referred to as anti-entropy. Entropy is a concept in physics, and represents disorder; anti-entropy is seeking consistency in disorder, which fully illustrates a characteristic of gossip. In a bounded network, each hard disk randomly communicates with another hard disk, and finally, states of all hard disks become consistent after disordered communication. Each hard disk may know states of all other hard disks, or states of only several neighboring hard disks. However, as long as these hard disks may be connected by using a network, their states may all remain consistent finally, which, certainly, also has a characteristic of epidemic spreading.

Exemplarily, that the cluster system includes four hard disks, that is, a hard disk A, a hard disk B, a hard disk C, and a hard disk D, is used as an example. A possible implementation manner of implementing the foregoing determining the collaboration service capability by all the hard disks in the cluster system by using the gossip protocol may include:
(1) The hard disk A in the cluster system may first negotiate with the hard disk B in the cluster system, to determine a common capability set supported by both the hard disk A and the hard disk B, and negotiate whether the hard disk A or the hard disk B performs further negotiation with another hard disk in the cluster system, such as the hard disk C in the cluster system, with which negotiation has not been performed.
(2) If the hard disk A negotiates with the hard disk C, the hard disk A and the hard disk C may determine, after negotiation, a common capability set supported by the hard disk A, the hard disk B, and the hard disk C, and negotiate whether the hard disk A or the hard disk C performs further negotiation with another hard disk in the cluster system, such as the hard disk D, with which negotiation has not been performed. In this embodiment of the present invention, the foregoing hard disk A, hard disk B, and hard disk C may be multiple second hard disks; the common capability set supported by the hard disk A, the hard disk B, and the hard disk C may be a second capability set, and a hard disk that is determined by means of negotiation and is to perform further negotiation with the hard disk D may be a second hard disk in the multiple second hard disks.
(3) If the hard disk A negotiates with the hard disk D, the hard disk A and the hard disk D may determine, after negotiation, a common capability set supported by the hard disk A, the hard disk B, the hard disk C, and the hard disk D. In this embodiment of the present invention, the hard disk A is a second hard disk in the multiple second hard disks, the hard disk D is a first hard disk, a set of service capabilities supported by the hard disk D is a first capability set; then, the common capability set supported by the hard disk A, the hard disk B, the hard disk C, and the hard disk D is a common capability set of the first capability set and the second capability set.

Correspondingly, if it is negotiated in (1) that the hard disk B performs further negotiation with another hard disk in the cluster system with which negotiation has not been performed, the hard disk B negotiates with the hard disk C in (2), to determine the common capability set supported by the hard disk A, the hard disk B, and the hard disk C, and negotiate whether the hard disk B or the hard disk C performs further negotiation with another hard disk in the cluster system with which negotiation has not been performed.

If it is negotiated in (2) that the hard disk C performs further negotiation with another hard disk in the cluster system with which negotiation has not been performed, the hard disk C negotiates with the hard disk D in (3), to determine the common capability set supported by the hard disk A, the hard disk B, the hard disk C, and the hard disk D.

By analogy, if there are multiple hard disks in the cluster system, a hard disk that is determined by means of negotiation in (3) and is to perform further negotiation with another hard disk in the cluster system with which negotiation has not been performed negotiates with the another hard disk in the cluster system with which negotiation has not been performed, to finally determine a common capability set supported by all hard disks in the cluster system.
(4) A hard disk that finally determines the common capability set supported by all the hard disks in the cluster system, that is, the hard disk D, sends the common capability set to all the hard disks in the cluster system, such as the hard disk A, the hard disk B, and the hard disk C, so that all the hard disks in the cluster system know the common capability set supported by all these hard disks.
(5) All the hard disks in the cluster system mutually compare random numbers generated by the hard disks, to determine a hard disk satisfying the preset policy, and use the hard disk as the preferred hard disk.

It should be noted that, if there are multiple hard disks satisfying the preset policy, the multiple hard disks may re-generate new random numbers and further compare the new random numbers, until a unique hard disk satisfying the preset policy is obtained.
(6) All the hard disks in the cluster system determine, according to a priority that is of a service capability in the common capability set and is in the capability set of the preferred hard disk, the collaboration service capability for performing service processing from the common capability set.

In the foregoing method in which the gossip protocol is used, when there are multiple second hard disks, the second capability set is a set of service capabilities supported by all the multiple second hard disks and determined by the multiple second hard disks after service capability negotiation. For example, the foregoing hard disk A, hard disk B, and hard disk C are all second hard disks, and the hard disk D is the first hard disk. A common capability set of the hard disk A, the hard disk B, and the hard disk C that is determined by means of negotiation by the hard disk A, the hard disk B, and the hard disk C is the second capability set, and a capability set of the hard disk D is the first capability set. In this case, a common capability set of the hard disk A, the hard disk B, the hard disk C, and the hard disk D that is determined by means of negotiation by the hard disk A, the hard disk B, the hard disk C, and the hard disk D is the common capability set of the first capability set and the second capability set.

In the still another method for interaction between hard disks that is provided in this embodiment of the present invention, because interaction between hard disks does not need to rely on a cluster controller and only relates to interaction and negotiation between the hard disks, frequent communication between the hard disks and the cluster controller can be prevented, which reduces pressure of the cluster controller, decreases interaction times, reduces a service processing delay, and improves overall performance of a cluster system.

According to the still another method for interaction between hard disks that is provided in this embodiment of the present invention, hard disks in a cluster system may directly perform interaction, to determine, by means of negotiation, a common capability set supported by the hard disks and determine a collaboration service capability for performing service processing from the common capability set, so that the hard disks may all use the collaboration service capability to perform service processing with another hard disk. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

### Embodiment 3

As shown in FIG. 6, the present invention provides a hard disk 1, and the hard disk 1 may include:
a determining unit 10, configured to determine a first capability set, where the first capability set is a set of service capabilities supported by the hard disk;
a receiving unit 11, configured to receive a second capability set sent by a second hard disk, where the second capability set is a set of service capabilities supported by the second hard disk; where
the determining unit 10 is further configured to determine a common capability set according to the first capability set and the second capability set that is received by the receiving unit 11, and determine a collaboration service capability from the common capability set, where the common capability set is a set of service capabilities supported by both the hard disk and the second hard disk; and
a service processing unit 12, configured to use the collaboration service capability determined by the determining unit 10 to perform service processing with the second hard disk.

Optionally, the determining unit 10 is specifically configured to: when the common capability set includes multiple service capabilities, determine a preferred hard disk from the hard disk and the second hard disk according to a preset policy, and determine the collaboration service capability from the common capability set according to priorities that are of the multiple service capabilities and are in a capability set corresponding to the preferred hard disk.

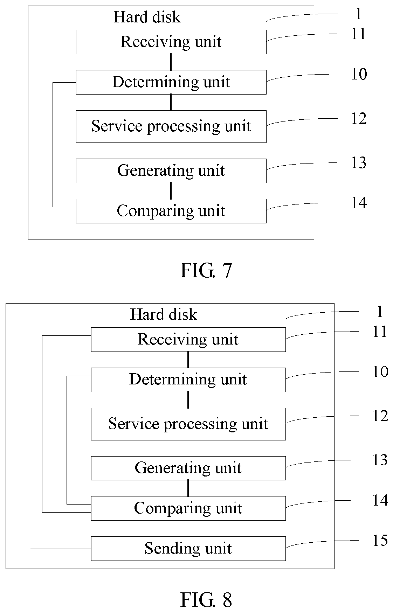

Optionally, as shown in FIG. 7, the hard disk 1 may further include a generating unit 13 and a comparing unit 14.

The generating unit 13 is configured to generate a first random number; the receiving unit 11 is further configured to receive a second random number sent by the second hard disk; the comparing unit 14 is configured to compare the first random number generated by the generating unit 13 with the second random number received by the receiving unit 11; the determining unit 10 is specifically configured to determine, according to a comparison result of the comparing unit 14, that a hard disk satisfying the preset policy is the preferred hard disk, where the preset policy is that a random number is maximum or that a random number is minimum.

Optionally, the determining unit 10 is specifically configured to determine, from the hard disk and the second hard disk, that a hard disk actively initiating service processing is the preferred hard disk.

Optionally, the hard disk and the second hard disk are hard disks in a same cluster system; the hard disk is a primary hard disk in the cluster system, the second hard disk is a secondary hard disk in the cluster system, and there are multiple second hard disks.

Optionally, as shown in FIG. 8, the hard disk 1 may further include a sending unit 15.

The sending unit 15 is configured to send the collaboration service capability determined by the determining unit 10 to the second hard disk, so that the second hard disk uses the collaboration service capability to perform service processing with the hard disk.

The hard disk 1 provided in this embodiment of the present invention may be a hard disk in a cluster system, and the hard disk 1 may be an Ethernet interface hard disk in a hard disk cluster system.

This embodiment of the present invention provides a hard disk. The hard disk determines a first capability set, where the first capability set is a set of service capabilities supported by the hard disk; the hard disk receives a second capability set sent by a second hard disk, where the second capability set is a set of service capabilities supported by the second hard disk; the hard disk determines a common capability set according to the first capability set and the second capability set, where the common capability set is a set of service capabilities supported by both the hard disk and the second hard disk; the hard disk determines a collaboration service capability from the common capability set, to use the collaboration service capability to perform service processing with the second hard disk. By using this solution, the hard disk may directly interact with the second hard disk, to determine, by means of negotiation, the common capability set supported by both the hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

### Embodiment 4

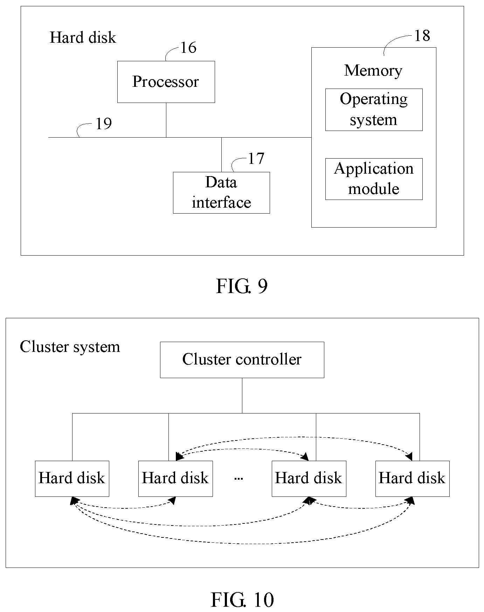

As shown in FIG. 9, this embodiment of the present invention provides a hard disk, which is corresponding to a method for interaction between hard disks that is provided in an embodiment of the present invention. The hard disk may include a processor 16, for example, a CPU (central processing unit), a data interface 17, a memory 18, and a system bus 19. The system bus 19 is configured to implement connections and communication between these components. The memory 18 may include a RAM (random access memory), and may further include a non-volatile memory, for example, at least one disk memory. The memory 18 may optionally include at least one storage apparatus.

In some implementation manners, the memory 18 stores the following elements, an executable module or a data structure, or a subset thereof, or an extended set thereof:
an operating system, including various system programs, which are configured to implement various basic services and process a hardware-based task; and
an application module, including various application programs, which are configured to implement various application services.

When the hard disk runs, the processor 16 may perform a method procedure described in any one of FIG. 1 to FIG. 4 by running an internal execution instruction of the hard disk, which specifically includes the following:
The processor 16 is configured to: determine a first capability set by using the system bus 19; receive, from the data interface 17 by using the system bus 19, a second capability set sent by a second hard disk; determine a common capability set according to the first capability set and the second capability set; and determine a collaboration service capability from the common capability set, to use the collaboration service capability to perform service processing with the second hard disk; where the first capability set is a set of service capabilities supported by the hard disk, the second capability set is a set of service capabilities supported by the second hard disk, and the common capability set is a set of service capabilities supported by both the hard disk and the second hard disk. The memory 18 is configured to store the first capability set, the second capability set, the common capability set, and the collaboration service capability, and an application program and a related application code that are used to complete the foregoing process. The processor 16 completes the foregoing process by executing the application program and invoking the application code.

Optionally, the processor 16 is specifically configured to: when the common capability set includes multiple service capabilities, determine a preferred hard disk from the hard disk and the second hard disk according to a preset policy, and determine the collaboration service capability from the common capability set according to priorities that are of the multiple service capabilities and are in a capability set corresponding to the preferred hard disk.

Optionally, the processor 16 is specifically configured to: generate a first random number; receive, from the data interface 17 by using the system bus 19, a second random number sent by the second hard disk; compare the first random number with the second random number; and determine, according to a comparison result, that a hard disk satisfying the preset policy is the preferred hard disk, where the preset policy is that a random number is maximum or that a random number is minimum.

Optionally, the processor 16 is further configured to determine, from the hard disk and the second hard disk, that a hard disk actively initiating service processing is the preferred hard disk. Optionally, the hard disk and the second hard disk are hard disks in a same cluster system; the hard disk is a primary hard disk in the cluster system, the second hard disk is a secondary hard disk in the cluster system, and there are multiple second hard disks.

Optionally, the processor 16 is further configured to send the collaboration service capability to the second hard disk through the data interface 17 by using the system bus 19, so that the second hard disk uses the collaboration service capability to perform service processing with the hard disk.

The hard disk provided in this embodiment of the present invention may be a hard disk in a cluster system, and the hard disk may be an Ethernet interface hard disk in a hard disk cluster system.

This embodiment of the present invention provides a hard disk. The hard disk determines a first capability set, where the first capability set is a set of service capabilities supported by the hard disk; the hard disk receives a second capability set sent by a second hard disk, where the second capability set is a set of service capabilities supported by the second hard disk; the hard disk determines a common capability set according to the first capability set and the second capability set, where the common capability set is a set of service capabilities supported by both the hard disk and the second hard disk; the hard disk determines a collaboration service capability from the common capability set, to use the collaboration service capability to perform service processing with the second hard disk. By using this solution, the hard disk may directly interact with the second hard disk, to determine, by means of negotiation, the common capability set supported by both the hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

### Embodiment 5

As shown in FIG. 10, this embodiment of the present invention provides a cluster system, where the cluster system may include multiple hard disks according to the foregoing Embodiment 3 or Embodiment 4. One hard disk in the multiple hard disks may determine, by performing the methods for interaction between hard disks according to the foregoing Embodiment 1 and Embodiment 2, a collaboration service capability for performing service processing with another hard disk in the multiple hard disks except the one hard disk, and use the collaboration service capability to perform service processing with the another hard disk.

Specifically, for implementation of a method for interaction between two hard disks in a cluster system, refer to the methods for interaction between hard disks that are provided in Embodiment 1 and Embodiment 2 of the present invention. Specific implementation processes have been described in detail in the foregoing Embodiment 1 and Embodiment 2, and details are not described herein again. For implementation of a method for interaction between more than two hard disks in a cluster system, refer to the another method for interaction between hard disks and the still another method for interaction between hard disks that are provided in Embodiment 2 of the present invention; specific implementation processes have been described in detail in the foregoing Embodiment 2, and details are not described herein again.

This embodiment of the present invention provides a cluster system. A first hard disk in the cluster system determines a first capability set, where the first capability set is a set of service capabilities supported by the first hard disk; the first hard disk receives a second capability set sent by a second hard disk, where the second capability set is a set of service capabilities supported by the second hard disk; the first hard disk determines a common capability set according to the first capability set and the second capability set, where the common capability set is a set of service capabilities supported by both the first hard disk and the second hard disk; the first hard disk determines a collaboration service capability from the common capability set, to use the collaboration service capability to perform service processing with the second hard disk. By using this solution, the first hard disk may directly interact with the second hard disk, to determine, by means of negotiation, the common capability set supported by both the first hard disk and the second hard disk, determine a collaboration service capability for performing service processing from the common capability set, and use the collaboration service capability to perform service processing with the other party. Therefore, compared with that in the prior art, a cluster controller is required to perform centralized scheduling between hard disks, a problem that performance of the cluster controller is reduced due to relatively high load pressure of the cluster controller is solved, so that the load pressure of the cluster controller can be relieved, and the performance of the cluster controller is improved.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and units, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in the embodiments of the present invention. The foregoing storage medium includes: any medium that can store program code, such as a USB flash drive, a removable hard disk, a ROM (read-only memory), a random access memory, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for interaction between hard disks, comprising:
determining, by a first hard disk, a first capability set, wherein the first capability set is a set of service capabilities supported by the first hard disk (S101);
receiving, by the first hard disk, a second capability set sent by a second hard disk, wherein the second capability set is a set of service capabilities supported by the second hard disk(S102);
determining, by the first hard disk, a common capability set according to the first capability set and the second capability set, wherein the common capability set is a set of service capabilities supported by both the first hard disk and the second hard disk(S103); and
determining, by the first hard disk, a collaboration service capability from the common capability set, to use the collaboration service capability to perform service processing with the second hard disk(S104).

2. The method for interaction between hard disks according to claim 1, wherein when the common capability set comprises multiple service capabilities, the determining, by the first hard disk, a collaboration service capability from the common capability set comprises:
determining, by the first hard disk, a preferred hard disk from the first hard disk and the second hard disk according to a preset policy (S204); and
determining, by the first hard disk, the collaboration service capability according to priorities that are of the multiple service capabilities in the common capability set and are in a capability set of the preferred hard disk (S205).

3. The method for interaction between hard disks according to claim 2, wherein the method further comprises:
generating, by the first hard disk, a first random number (S2040); and
receiving, by the first hard disk, a second random number sent by the second hard disk (S2041);
the determining, by the first hard disk, a preferred hard disk from the first hard disk and the second hard disk according to a preset policy (S204) comprises:
comparing, by the first hard disk, the first random number with the second random number to determine that a hard disk satisfying the preset policy is the preferred hard disk, wherein the preset policy is that a random number is maximum or that a random number is minimum (S2042).

4. The method for interaction between hard disks according to claim 2, wherein the determining, by the first hard disk, a preferred hard disk from the first hard disk and the second hard disk according to a preset policy (S204) comprises:
determining, by the first hard disk and from the first hard disk and the second hard disk, that a hard disk actively initiating service processing is the preferred hard disk.

5. The method for interaction between hard disks according to claim 1, wherein:
the first hard disk and the second hard disk are hard disks in a same cluster system; the first hard disk is a primary hard disk in the cluster system, the second hard disk is a secondary hard disk in the cluster system, and there are multiple second hard disks.

6. The method for interaction between hard disks according to claim 1, wherein:
when there are multiple second hard disks, the second capability set is a set of service capabilities supported by all the multiple second hard disks and determined by the multiple second hard disks after service capability negotiation.

7. The method for interaction between hard disks according to any one of claims 1 to 6, wherein the method further comprises:
sending, by the first hard disk, the collaboration service capability to the second hard disk, so that the second hard disk uses the collaboration service capability to perform service processing with the first hard disk (S207).

8. A hard disk, comprising:
a determining unit (10), configured to determine a first capability set, wherein the first capability set is a set of service capabilities supported by the hard disk;
a receiving unit (11), configured to receive a second capability set sent by a second hard disk, wherein the second capability set is a set of service capabilities supported by the second hard disk; wherein
the determining unit (10) is further configured to determine a common capability set according to the first capability set and the second capability set that is received by the receiving unit (11), and determine a collaboration service capability from the common capability set, wherein the common capability set is a set of service capabilities supported by both the hard disk and the second hard disk; and
a service processing unit (12), configured to use the collaboration service capability determined by the determining unit (10) to perform service processing with the second hard disk.

9. The hard disk according to claim 8, wherein:
the determining unit (10) is specifically configured to: when the common capability set comprises multiple service capabilities, determine a preferred hard disk from the hard disk and the second hard disk according to a preset policy, and determine the collaboration service capability according to priorities that are of the multiple service capabilities in the common capability set and are in a capability set of the preferred hard disk.

10. The hard disk according to claim 9, wherein the hard disk further comprises a generating unit (13) and a comparing unit (14); wherein:
the generating unit (13) is configured to generate a first random number;
the receiving unit (11) is further configured to receive a second random number sent by the second hard disk;
the comparing unit (14) is configured to compare the first random number generated by the generating unit with the second random number received by the receiving unit (11); and
the determining unit (10) is specifically configured to determine, according to a comparison result of the comparing unit (14), that a hard disk satisfying the preset policy is the preferred hard disk, wherein the preset policy is that a random number is maximum or that a random number is minimum.

11. The hard disk according to claim 9, wherein:
the determining unit (10) is specifically configured to determine, from the hard disk and the second hard disk, that a hard disk actively initiating service processing is the preferred hard disk.

12. The hard disk according to claim 8, wherein:
the hard disk and the second hard disk are hard disks in a same cluster system; the hard disk is a primary hard disk in the cluster system, the second hard disk is a secondary hard disk in the cluster system, and there are multiple second hard disks.

13. The hard disk according to claim 8, wherein:
when there are multiple second hard disks, the second capability set is a set of service capabilities supported by all the multiple second hard disks and determined by the multiple second hard disks after service capability negotiation.

14. The hard disk according to any one of claims 8 to 13, wherein the hard disk further comprises a sending unit (15); wherein:
the sending unit (15) is configured to send the collaboration service capability determined by the determining unit (10) to the second hard disk, so that the second hard disk uses the collaboration service capability to perform service processing with the hard disk.

15. A cluster system, comprising:
multiple hard disks according to any one of claims 8 to 14, a collaboration service capability for performing service processing with another hard disk in the multiple hard disks except the one hard disk, and uses the collaboration service capability to perform service processing with the another hard disk.

## Patentansprüche

1. Verfahren zur Interaktion zwischen Festplatten, umfassend:
Bestimmen, durch eine erste Festplatte, einer ersten Fähigkeitsmenge, wobei die erste Fähigkeitsmenge eine Menge von Dienstfähigkeiten ist, die durch die erste Festplatte unterstützt wird (S101);
Empfangen, durch die erste Festplatte, einer zweiten Fähigkeitsmenge, die durch eine zweite Festplatte gesendet wird, wobei die zweite Fähigkeitsmenge eine Menge von Dienstfähigkeiten ist, die durch die zweite Festplatte unterstützt wird (S102);
Bestimmen, durch die erste Festplatte, einer gemeinsamen Fähigkeitsmenge gemäß der ersten Fähigkeitsmenge und der zweiten Fähigkeitsmenge, wobei die gemeinsame Fähigkeitsmenge eine Menge von Dienstfähigkeiten ist, die durch sowohl die erste Festplatte als auch die zweite Festplatte unterstützt wird (S103); und
Bestimmen, durch die erste Festplatte, einer Kollaborationsdienstfähigkeit aus der gemeinsamen Fähigkeitsmenge, um die Kollaborationsdienstfähigkeit zum Durchführen einer Dienstverarbeitung mit der zweiten Festplatte zu verwenden (S104).

2. Verfahren zur Interaktion zwischen Festplatten nach Anspruch 1, wobei, wenn die gemeinsame Fähigkeitsmenge mehrere Dienstfähigkeiten umfasst, das Bestimmen, durch die erste Festplatte, einer Kollaborationsdienstfähigkeit aus der gemeinsamen Fähigkeitsmenge Folgendes umfasst:
Bestimmen, durch die erste Festplatte, einer bevorzugten Festplatte aus der ersten Festplatte und der zweiten Festplatte gemäß einer voreingestellten Richtlinie (S204) und Bestimmen, durch die erste Festplatte, der Kollaborationsdienstfähigkeit gemäß Prioritäten der mehreren Dienstfähigkeiten in der gemeinsamen Fähigkeitsmenge, die sich in einer Fähigkeitsmenge der bevorzugten Festplatte befinden (S205).

3. Verfahren zur Interaktion zwischen Festplatten nach Anspruch 2, wobei das Verfahren ferner Folgendes umfasst:
Erzeugen, durch die erste Festplatte, einer ersten Zufallszahl (S2040) und
Empfangen, durch die erste Festplatte, einer zweiten Zufallszahl, die durch die zweite Festplatte gesendet wird (S2041);
wobei das Bestimmen, durch die erste Festplatte, einer bevorzugten Festplatte aus der ersten Festplatte und der zweiten Festplatte gemäß einer voreingestellten Richtlinie (S204) Folgendes umfasst:
Vergleichen, durch die erste Festplatte, der ersten Zufallszahl mit der zweiten Zufallszahl, um zu bestimmen, dass eine Festplatte, die die voreingestellte Richtlinie erfüllt, die bevorzugte Festplatte ist, wobei die voreingestellte Richtlinie lautet, dass eine Zufallszahl ein Maximum ist oder dass eine Zufallszahl ein Minimum ist (S2042).

4. Verfahren zur Interaktion zwischen Festplatten nach Anspruch 2, wobei das Bestimmen, durch die erste Festplatte, einer bevorzugten Festplatte aus der ersten Festplatte und der zweiten Festplatte gemäß einer voreingestellten Richtlinie (S204) Folgendes umfasst:
Bestimmen, durch die erste Festplatte und aus der ersten Festplatte und der zweiten Festplatte, dass eine Festplatte, die eine Dienstverarbeitung aktiv initiiert, die bevorzugte Festplatte ist.

5. Verfahren zur Interaktion zwischen Festplatten nach Anspruch 1, wobei:
die erste Festplatte und die zweite Festplatte Festplatten in demselben Cluster-System sind; die erste Festplatte eine primäre Festplatte im Cluster-System ist, die zweite Festplatte eine sekundäre Festplatte im Cluster-System ist und es mehrere zweite Festplatten gibt.

6. Verfahren zur Interaktion zwischen Festplatten nach Anspruch 1, wobei:
wenn es mehrere zweite Festplatten gibt, die zweite Fähigkeitsmenge eine Menge von Dienstfähigkeiten ist, die durch alle der mehreren zweiten Festplatten unterstützt wird und durch die mehreren zweiten Festplatten nach einer Dienstfähigkeitsaushandlung bestimmt wird.

7. Verfahren zur Interaktion zwischen Festplatten nach einem der Ansprüche 1 bis 6, wobei das Verfahren ferner Folgendes umfasst:
Senden, durch die erste Festplatte, der Kollaborationsdienstfähigkeit zur zweiten Festplatte, sodass die zweite Festplatte die Kollaborationsdienstfähigkeit zum Durchführen einer Dienstverarbeitung mit der ersten Festplatte verwendet (S207).

8. Festplatte, umfassend:
eine Bestimmungseinheit (10), die ausgelegt ist zum Bestimmen einer ersten Fähigkeitsmenge, wobei die erste Fähigkeitsmenge eine Menge von Dienstfähigkeiten ist, die durch die Festplatte unterstützt wird;
eine Empfangseinheit (11), die ausgelegt ist zum Empfangen einer zweiten Fähigkeitsmenge, die durch eine zweite Festplatte gesendet wird, wobei die zweite Fähigkeitsmenge eine Menge von Dienstfähigkeiten ist, die durch die zweite Festplatte unterstützt wird; wobei
die Bestimmungseinheit (10) ferner ausgelegt ist zum Bestimmen einer gemeinsamen Fähigkeitsmenge gemäß der ersten Fähigkeitsmenge und der zweiten Fähigkeitsmenge, die durch die Empfangseinheit (11) empfangen wird, und zum Bestimmen einer Kollaborationsdienstfähigkeit aus der gemeinsamen Fähigkeitsmenge, wobei die gemeinsame Fähigkeitsmenge eine Menge von Dienstfähigkeiten ist, die durch sowohl die Festplatte als auch die zweite Festplatte unterstützt wird; und
eine Dienstverarbeitungseinheit (12), die ausgelegt ist zum Verwenden der Kollaborationsdienstfähigkeit, die durch die Bestimmungseinheit (10) bestimmt wird, um eine Dienstverarbeitung mit der zweiten Festplatte durchzuführen.

9. Festplatte nach Anspruch 8, wobei:
die Bestimmungseinheit (10) spezifisch zu Folgendem ausgelegt ist: wenn die gemeinsame Fähigkeitsmenge mehrere Dienstfähigkeiten umfasst, Bestimmen einer bevorzugten Festplatte aus der Festplatte und der zweiten Festplatte gemäß einer voreingestellten Richtlinie und Bestimmen der Kollaborationsdienstfähigkeit gemäß Prioritäten der mehreren Dienstfähigkeiten in der gemeinsamen Fähigkeitsmenge, die sich in einer Fähigkeitsmenge der bevorzugten Festplatte befinden.

10. Festplatte nach Anspruch 9, wobei die Festplatte ferner eine Erzeugungseinheit (13) und eine Vergleichseinheit (14) umfasst, wobei:
die Erzeugungseinheit (13) ausgelegt ist zum Erzeugen einer ersten Zufallszahl;
die Empfangseinheit (11) ferner ausgelegt ist zum Empfangen einer zweiten Zufallszahl, die durch die zweite Festplatte gesendet wird;
die Vergleichseinheit (14) ausgelegt ist zum Vergleichen der ersten Zufallszahl, die durch die Erzeugungseinheit erzeugt wird, mit der zweiten Zufallszahl, die durch die Empfangseinheit (11) empfangen wird; und
die Bestimmungseinheit (10) spezifisch ausgelegt ist zum Bestimmen, gemäß einem Vergleichsergebnis der Vergleichseinheit (14), dass eine Festplatte, die die voreingestellte Richtlinie erfüllt, die bevorzugte Festplatte ist, wobei die voreingestellte Richtlinie lautet, dass eine Zufallszahl ein Maximum ist oder dass eine Zufallszahl ein Minimum ist.

11. Festplatte nach Anspruch 9, wobei:
die Bestimmungseinheit (10) spezifisch ausgelegt ist zum Bestimmen, aus der Festplatte und der zweiten Festplatte, dass eine Festplatte, die eine Dienstverarbeitung aktiv initiiert, die bevorzugte Festplatte ist.

12. Festplatte nach Anspruch 8, wobei:
die Festplatte und die zweite Festplatte Festplatten in demselben Cluster-System sind; die Festplatte eine primäre Festplatte im Cluster-System ist, die zweite Festplatte eine sekundäre Festplatte im Cluster-System ist und es mehrere zweite Festplatten gibt.

13. Festplatte nach Anspruch 8, wobei:
wenn es mehrere zweite Festplatten gibt, die zweite Fähigkeitsmenge eine Menge von Dienstfähigkeiten ist, die durch alle der mehreren zweiten Festplatten unterstützt wird und durch die mehreren zweiten Festplatten nach einer Dienstfähigkeitsaushandlung bestimmt wird.

14. Festplatte nach einem der Ansprüche 8 bis 13, wobei die Festplatte ferner eine Sendeeinheit (15) umfasst; wobei:
die Sendeeinheit (15) ausgelegt ist zum Senden der Kollaborationsdienstfähigkeit, die durch die Bestimmungseinheit (10) bestimmt wird, zur zweiten Festplatte, sodass die zweite Festplatte die Kollaborationsdienstfähigkeit zum Durchführen einer Dienstverarbeitung mit der Festplatte verwendet.

15. Cluster-System, umfassend:
mehrere Festplatten nach einem der Ansprüche 8 bis 14, eine Kollaborationsdienstfähigkeit zum Durchführen einer Dienstverarbeitung mit einer anderen Festplatte in den mehreren Festplatten außer der einen Festplatte und Verwenden der Kollaborationsdienstfähigkeit zum Durchführen einer Dienstverarbeitung mit der anderen Festplatte.

## Revendications

1. Procédé pour l'interaction entre disques durs, comprenant les étapes consistant à :
déterminer, par un premier disque dur, un premier ensemble de capacités, le premier ensemble de capacités étant un ensemble de capacités de service prises en charge par le premier disque dur (S101) ;
recevoir, par le premier disque dur, un deuxième ensemble de capacités envoyé par un deuxième disque dur, le deuxième ensemble de capacités étant un ensemble de capacités de service prises en charge par le deuxième disque dur (S 102) ;
déterminer, par le premier disque dur, un ensemble de capacités communes en fonction du premier ensemble de capacités et du deuxième ensemble de capacités, l'ensemble de capacités communes étant un ensemble de capacités de service prises en charge à la fois par le premier disque dur et par le deuxième disque dur (S103) ; et
déterminer, par le premier disque dur, une capacité de services de collaboration à partir de l'ensemble de capacités communes, afin d'utiliser la capacité de services de collaboration pour effectuer un traitement de services avec le deuxième disque dur (S104).

2. Procédé pour l'interaction entre disques durs selon la revendication 1, dans lequel, lorsque l'ensemble de capacités communes comprend de multiples capacités de service, la détermination, par le premier disque dur, d'une capacité de services de collaboration à partir de l'ensemble de capacités communes comprend les étapes consistant à :
déterminer, par le premier disque dur, un disque dur préférentiel entre le premier disque dur et le deuxième disque dur selon une politique prédéfinie (S204) ; et
déterminer, par le premier disque dur, la capacité de services de collaboration selon des priorités qui sont celles des multiples capacités de service de l'ensemble de capacités communes et qui font partie d'un ensemble de capacités du disque dur préférentiel (S205).

3. Procédé pour l'interaction entre disques durs selon la revendication 2, le procédé comprenant également les étapes consistant à :
générer, par le premier disque dur, un premier nombre aléatoire (S2040) ; et
recevoir, par le premier disque dur, un deuxième nombre aléatoire envoyé par le deuxième disque dur (S2041) ;
la détermination, par le premier disque dur, d'un disque dur préférentiel entre le premier disque dur et le deuxième disque dur selon une politique prédéfinie (S204) comprenant l'étape consistant à :
comparer, par le premier disque dur, le premier nombre aléatoire au deuxième nombre aléatoire afin de déterminer qu'un disque dur qui satisfait à la politique prédéfinie est le disque dur préférentiel, la politique prédéfinie étant qu'un nombre aléatoire est maximal ou qu'un nombre aléatoire est minimal (S2042).

4. Procédé pour l'interaction entre disques durs selon la revendication 2, dans lequel la détermination, par le premier disque dur, d'un disque dur préférentiel entre le premier disque dur et le deuxième disque dur selon une politique prédéfinie (S204) comprend l'étape consistant à :
déterminer, par le premier disque dur et entre le premier disque dur et le deuxième disque dur, qu'un disque dur qui lance activement un traitement de services est le disque dur préférentiel.

5. Procédé pour l'interaction entre disques durs selon la revendication 1, dans lequel :
le premier disque dur et le deuxième disque dur sont des disques durs faisant partie d'un même système en grappe ; le premier disque dur est un disque dur primaire du système en grappe, le deuxième disque dur est un disque dur secondaire du système en grappe, et il existe de multiples deuxièmes disques durs.

6. Procédé pour l'interaction entre disques durs selon la revendication 1, dans lequel :
lorsqu'il existe de multiples deuxièmes disques durs, le deuxième ensemble de capacités est un ensemble de capacités de service prises en charge par tous les multiples deuxièmes disques durs et déterminées par les multiples deuxièmes disques durs après une négociation de capacités de service.

7. Procédé pour l'interaction entre disques durs selon l'une quelconque des revendications 1 à 6, le procédé comprenant également l'étape consistant à :
envoyer, par le premier disque dur, la capacité de services de collaboration au deuxième disque dur, afin que le deuxième disque dur utilise la capacité de services de collaboration pour effectuer un traitement de services avec le premier disque dur (S207).

8. Disque dur, comprenant :
une unité de détermination (10), configurée pour déterminer un premier ensemble de capacités, le premier ensemble de capacités étant un ensemble de capacités de service prises en charge par le disque dur ;
une unité de réception (11), configurée pour recevoir un deuxième ensemble de capacités envoyé par un deuxième disque dur, le deuxième ensemble de capacités étant un ensemble de capacités de service prises en charge par le deuxième disque dur ;
l'unité de détermination (10) étant également configurée pour déterminer un ensemble de capacités communes en fonction du premier ensemble de capacités et du deuxième ensemble de capacités qui est reçu par l'unité de réception (11), et déterminer une capacité de services de collaboration à partir de l'ensemble de capacités communes, l'ensemble de capacités communes étant un ensemble de capacités de service prises en charge à la fois par le disque dur et par le deuxième disque dur ; et
une unité de traitement de services (12), configurée pour utiliser la capacité de services de collaboration déterminée par l'unité de détermination (10) afin d'effectuer un traitement de services avec le deuxième disque dur.

9. Disque dur selon la revendication 8, dans lequel :
l'unité de détermination (10) est spécifiquement configurée pour : lorsque l'ensemble de capacités communes comprend de multiples capacités de service, déterminer un disque dur préférentiel entre le disque dur et le deuxième disque dur selon une politique prédéfinie, et déterminer la capacité de services de collaboration selon des priorités qui sont celles des multiples capacités de service de l'ensemble de capacités communes et qui font partie d'un ensemble de capacités du disque dur préférentiel.

10. Disque dur selon la revendication 9, le disque dur comprenant également une unité de génération (13) et une unité de comparaison (14) ; dans lequel :
l'unité de génération (13) est configurée pour générer un premier nombre aléatoire ;
l'unité de réception (11) est en outre configurée pour recevoir un deuxième nombre aléatoire envoyé par le deuxième disque dur ;
l'unité de comparaison (14) est configurée pour comparer le premier nombre aléatoire généré par l'unité de génération au deuxième nombre aléatoire reçu par l'unité de réception (11) ; et
l'unité de détermination (10) est spécifiquement configurée pour déterminer, d'après un résultat de comparaison de l'unité de comparaison (14), qu'un disque dur qui satisfait à la politique prédéfinie est le disque dur préférentiel, la politique prédéfinie étant qu'un nombre aléatoire est maximal ou qu'un nombre aléatoire est minimal.

11. Disque dur selon la revendication 9, dans lequel :
l'unité de détermination (10) est spécifiquement configurée pour déterminer, entre le disque dur et le deuxième disque dur, qu'un disque dur qui lance activement un traitement de services est le disque dur préférentiel.

12. Disque dur selon la revendication 8, dans lequel :
le disque dur et le deuxième disque dur sont des disques durs faisant partie d'un même système en grappe ; le disque dur est un disque dur primaire du système en grappe, le deuxième disque dur est un disque dur secondaire du système en grappe, et il existe de multiples deuxièmes disques durs.

13. Disque dur selon la revendication 8, dans lequel :
lorsqu'il existe de multiples deuxièmes disques durs, le deuxième ensemble de capacités est un ensemble de capacités de service prises en charge par tous les multiples deuxièmes disques durs et déterminées par les multiples deuxièmes disques durs après une négociation de capacités de service.

14. Disque dur selon l'une quelconque des revendications 8 à 13, le disque dur comprenant également une unité d'envoi (15) ; dans lequel :
l'unité d'envoi (15) est configurée pour envoyer la capacité de services de collaboration déterminée par l'unité de détermination (10) au deuxième disque dur, afin que le deuxième disque dur utilise la capacité de services de collaboration pour effectuer un traitement de services avec le disque dur.

15. Système en grappe, comprenant :
de multiples disques durs selon l'une quelconque des revendications 8 à 14, une capacité de services de collaboration servant à effectuer un traitement de services avec un autre disque dur faisant partie des multiples disques durs à l'exception de l'un disque dur, le système utilisant la capacité de services de collaboration pour effectuer un traitement de services avec l'autre disque dur.
